# EUROPEAN PATENT SPECIFICATION

(11) **EP 2 067 637 B1**
(45) Date of publication and mention of the grant of the patent: **03.08.2011**
(21) Application number: 08170486.8
(22) Date of filing: 02.12.2008
(51) Int. Cl.: B60C 11/00

(54) **Pneumatic tire for race car**
Luftreifen für einen Rennwagen
Pneumatique pour voiture de course

(30) Priority: 03.12.2007 KR 20070124381
(43) Date of publication of application: 10.06.2009
(73) Proprietor: Hankook Tire Co., Ltd., Gangnam-gu, Seoul 135-723 (KR)
(72) Inventor: Eom, Jae Ho, Daejeon (KR)
(74) Representative: Intès, Didier Gérard André

(56) References cited:
- EP-A- 1 228 898
- EP-A- 1 398 182
- EP-A- 1 431 078
- EP-A- 1 818 188
- US-A1- 2007 084 533
- US-A1- 2007 221 303
- US-B1- 6 216 757

## Description

### Field of the Invention

The present invention relates generally to a pneumatic tire for a vehicle running at a high speed for a relatively long period of time like a race car. More specifically, the present invention relates to a pneumatic tire for a race car in which a tread portion has a two-layer structure having a different hardness respectively, thus enhancing a gripping and cornering performance during a long driving at a high speed.

### Description of the Related Art

As is well known in the art, the tread of a general pneumatic tire includes a two-layer structure having a cap tread layer and a base tread layer, wherein the cap tread layer is generally constituted by a softer rubber material than that of the base tread layer in order to enhance the gripping and cornering property. A conventional pneumatic tire for a race car, however, has a tread portion whose entire tread is made from one soft rubber material for the purpose of enhancing the durability at a high speed such as gripping and cornering performance. To provide such improved properties, the tread of the pneumatic tire for the race car has been manufactured from the soft rubber material consisting of a styrene-butadiene rubber (SBR) with high styrene content, carbon black with high content, and a large amount of oil.

Apparently, such conventional tread of the pneumatic tire for the race car made from the soft rubber material reveals that it shows the required gripping and cornering property at the initial stage of running for a short period of time, but it cannot meet the severe running condition to be lasted for a relatively long period of time at a high speed like a racing game. This means that such a long period of running status becomes a cause of a heat generation within the tread portion, thereby deteriorating the property of the rubber molecules constituting the tread portion. Therefore, Young's modulus or tensile modulus of the tread portion that is an elasticity coefficient representing the ratio of stress to strain tends to become smaller. As a result, it can be noted that wear resistance in the tread is lowered due to the severe moving of the rubber within the tread portion. Thus that facilitates wear of the tread during running operation, thereby decreasing the gripping force and deteriorating the cornering performance of the tire, which adversely affects the operability of the race car as a matter of course.

Also, in the prior art another pneumatic tire for a race car is suggested by increasing the amount of carbon black or reducing the content of oil for the sake of maintaining the good performance for a long period of time. Such tire, however, has proven to pose at least a drawback of lowering the gripping performance.

In an effort to provide to solve the fore-mentioned shortcomings, a pneumatic tire having a tread structure with different compositions in the opposite portions of the tread in the radial direction perpendicular to the tire's axis of rotation was proposed. In this prior art tire, however, the result is that the moving of the tread block could not be suppressed efficiently. It goes without saying that the uniform performance could not be anticipated for a long period of time in case of a racing game at a high speed.

For example, the reference DE-A-198 12 934 concerns a pneumatic tire comprising: a tread portion, a pair of bead portions, and a pair of sidewall portions extending between the tread portion and the bead portions, in which said tread portion consists of a tread rubber layer and a reinforced belt layer disposed radially beneath the tread rubber layer, said tread rubber layer is divided into a tread base layer and a tread cap layer disposed over the tread base layer.

### SUMMARY OF THE INVENTION

With the foregoing drawbacks in mind, it is therefore an object of the invention to provide a pneumatic tire for a race car that can uniformly maintain an excellent gripping and cornering property during running at a high speed for a long period of time.

Another object of the invention is to provide a pneumatic tire for a race car that can reduce the heat generation and decrease the change of the property of the rubber material within the tread portion, while avoiding the deterioration of a gripping and cornering performance.

In accordance with the present invention, the above and other objects can be accomplished by the provision of a pneumatic tire for a race car comprising: a tread portion, a pair of bead portions, and a pair of sidewall portions extending between the tread portion and the bead portions, in which said tread portion consists of a tread rubber layer and a reinforced belt layer disposed radially beneath the tread rubber layer, said tread rubber layer is divided into a tread base layer and a tread cap layer disposed over the tread base layer, said tread base layer being composed of a rubber material having a greater modulus by about 25 to 35 percent (%) than that of the rubber material for the tread cap layer, characterized in that the shoulder region of the tread rubber layer is divided into a shoulder base layer and a shoulder cap layer, disposed over the shoulder base layer, said shoulder base layer being hander than said shoulder cap layer.

According to another embodiment of the present invention, the rubber material for the shoulder cap layer has a less modulus, preferably by about 5 to 15 percent (%) than that of the rubber material for the tread cap layer.

In the further embodiment of the present invention, the shoulder base layer is composed of a rubber material having a greater modulus, preferably by about 25-35 percent (%) than that of the rubber material for the shoulder cap layer.

In accordance with the further embodiment of the present invention, the shoulder base layer or the shoulder cap layer has a width in the circumferential direction of the tire corresponding to about 30-40 percent (%) of one half (1/2) of the tread portion's width (W).

It can be appreciated in the present invention that the moving of the rubber material in the tread portion is remarkably suppressed, thereby reducing the heat generation therein and also decreasing the change of the property of the rubber material within the tread portion. Thus the inventive pneumatic tire for a race car is capable of enhancing the gripping and cornering property during running operation at a high speed for a long period of time, thereby providing excellent driving performance.

### BRIEF DESCRIPTION OF THE DRAWINGS

The above and other objects, features and other advantages of the present invention will become apparent from a review of the following detailed description of the preferred embodiment taken in conjunction with the accompanying drawings, in which:
FIG. 1 is a partial sectional view schematically illustrating the featured portion of a pneumatic tire for a race car in accordance with the invention;
FIG. 2 shows the interrelationship of lateral force and slip angle in the inventive tire and comparative tire, respectively; and
FIG. 3 is a graphical representation illustrating the respective result of a running roadway simulation test of the tire in accordance with the present invention and the comparative tire.

### DETAILED DESCRIPTION OF THE PREFERRED EMBODIMENTS

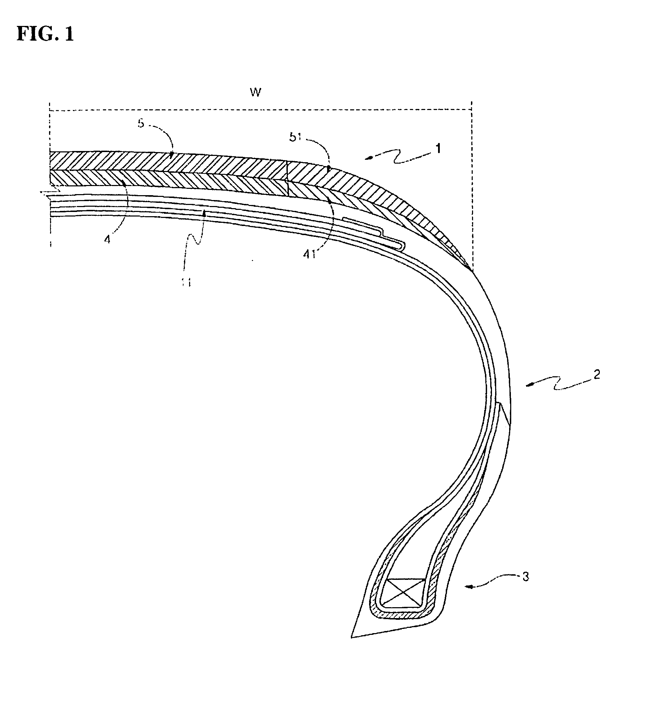

Referring now to FIG. 1, there is schematically shown a pneumatic tire for a race car in accordance with the present invention which comprises of a tread portion (1), a side wall portion (2) and a bead portion (3). The tread portion (1) includes a tread rubber layer and a reinforced belt layer (11) disposed radially beneath the tread rubber layer. The tread rubber layer is divided into a tread base layer (4) and a tread cap layer (5) superimposed in the radial direction of the tire.

It will be noted that the tread base layer (4) in accordance with the invention is composed of a rubber material having a greater modulus, preferably by about 25 to 35 percent (%) than that of the rubber material for the tread cap layer (5) in case the tread cap layer (5) is composed of a conventional rubber material.

Further, it can be seen in FIG. 1 that the shoulder region of the tread rubber layer according to another embodiment of the inventive tire is divided into a shoulder base layer (41) and a shoulder cap layer (51). The rubber material for the shoulder cap layer (51) has a less modulus, preferably by about 5 to 15 percent (%) than that of the rubber material for the tread cap layer (5). The reason to make the shoulder cap layer (51) to be softer than the tread cap layer (5) is designed to reduce the moving of the rubber in the tread cap layer (5) due to the relatively hard characteristics of the tread base layer (4).

Meanwhile, in the further embodiment of the present invention, the shoulder base layer (41) is composed of a rubber material having a greater modulus, preferably by about 25-35 percent (%) than that of the rubber material for the shoulder cap layer (51), thereby maintaining the good gripping and cornering property at the shoulder region of the tire for a long running operation.

As shown in FIG. 1, the width of the shoulder base layer (41) or the shoulder cap layer (51) in the circumferential direction of the tire is preferably within a range corresponding to about 30-40 percent (%) of one half (1/2) of the tread portion's width (W).

Since the tread base layer (4) is harder than the tread cap layer (5), it can be anticipated that the moving of the rubber material in the tread base layer (4) is restricted and subsequently the moving of the rubber material in the tread cap layer (5) is also suppressed, thereby resulting in reducing the heat generation in the tread cap layer (5). At the same time, as the shoulder cap layer (51) is softer than the tread cap layer (5) and further the shoulder base layer (41) is harder than the shoulder cap layer (51), the moving of the rubber material in the shoulder region is remarkably restricted, too. Accordingly, the change of the property of the rubber material within the tread portion as well as the shoulder region becomes to be minimized. Consequently, this will make sure that the tire in accordance with the present invention be capable of enhancing the gripping and cornering performance in the event that the race car is running at a high speed for a long period of time.

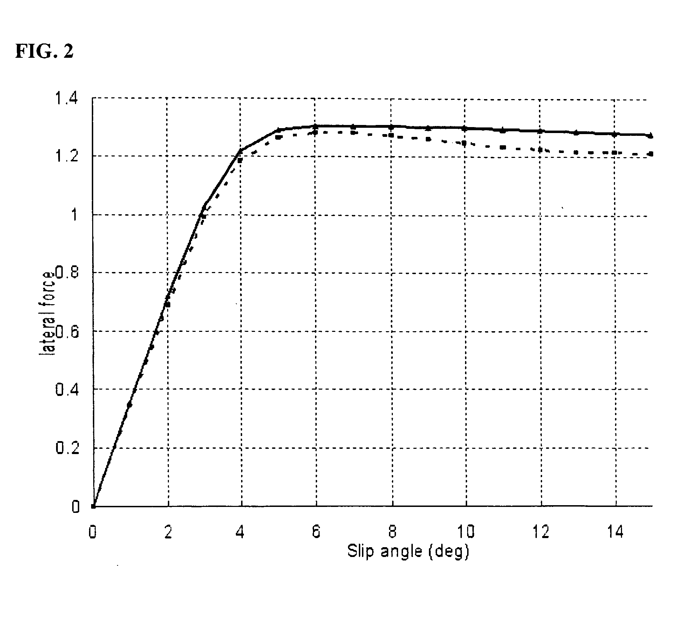

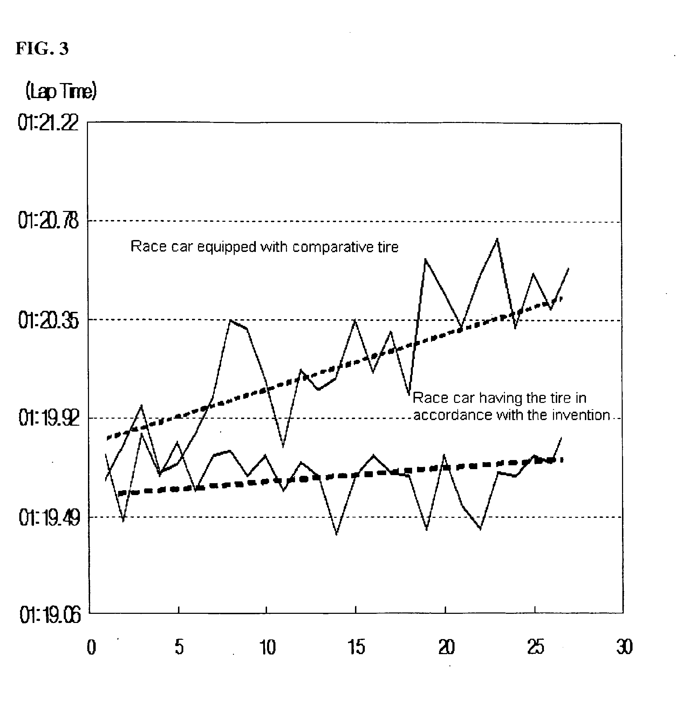

The result of the performance comparison test for the tire in accordance with the present invention will now be set forth in detail with reference to FIGS. 2 and 3. The specification of the tire according to the invention and the comparative tire was 225/45ZR17, and the respective tire was manufactured with a predetermined composition by the applicant. The test was separately performed by dividing into a cornering force test and a running roadway simulation test.

The cornering test was performed by means of using the Flat Trac® III Test System, which was manufactured by MTS Systems Corporation, USA and well known in the art. The cornering force, i.e., the lateral force was measured at running the test tire by changing the slip angle in the test system. The tread portion was heated to about 90°C so as to indicate the change of the gripping performance due to the moving of the rubber because of a heat generation within the tread portion.

Referring to FIG. 2, the value of the lateral force in the y coordinate is a dimensionless and represents a normalized lateral force which is a ratio of a lateral force (Newton) of the test system to a test force (Newton). As clearly shown in FIG. 2, the lateral force of the inventive tire in solid line is greater than that of the comparative tire in dotted line. Particularly, it can be appreciated that in the high slip angle region, i.e., over 6 degree of the slip angle the inventive tire was maintaining a substantially uniform lateral force, i.e., a cornering force with a slight decrease. The greater the slip angle is set, the larger difference in the lateral force between the inventive tire and the comparative tire is obtained. Thus it will be noted that the gripping performance of the tire in accordance with the present invention is remarkably improved in comparison with the comparative tire.

Next, the running roadway simulation test was canied out on a racing course which was designed to meet international standards. Each lap time was measured by actually driving the race car equipped with the inventive tire or the comparative tire, respectively on the racing course. The total number of the laps adopted in the present simulation test was 30 laps.

Referring to FIG. 3, it can be seen that the lap time of the race car having the tire in accordance with the present invention is faster than that of the race car equipped with the comparative tire. As clearly shown in FIG. 3, in response to the increase of the number of the lap, the lap time of the race car having the comparative tire increases rapidly, while the lap time of the race car equipped with the inventive tire maintains substantially the uniform value. Specifically, the variation of the lap time in the race car having the comparative tire is larger than that of the race car provided with the tire in accordance with the present invention.

As fully described above, the pneumatic tire for a race car in accordance with the present invention enables the moving of the rubber material in the tread portion to be suppressed, making it possible to reduce the heat generation therein and also to decrease the change of the property of the rubber material within the tread portion. This insures that the gripping and cornering property can be considerably enhanced during a long running at a high speed, thereby providing excellent driving performances.

## Claims

1. A pneumatic tire for a race car comprising: a tread portion (1), a pair of bead portions (3), and a pair of sidewall portions (2) extending between the tread portion (1) and the bead portions (3), in which said tread portion (1) consists of a tread rubber layer and a reinforced belt layer (11) disposed radially beneath the tread rubber layer, said tread rubber layer is divided into a tread base layer (4) and a tread cap layer (5) disposed over the tread base layer (4), said tread base layer (4) being composed of a rubber material having a greater modulus by about 25 to 35 percent (%) than that of the rubber material for the tread cap layer (5), **characterized in that** the shoulder region of the tread rubber layer is divided into a shoulder base layer (41) and a shoulder cap layer (51) disposed over the shoulder base layer (41), said shoulder base layer (41) being harder than said shoulder cap layer (51).

2. The pneumatic tire for a race car as recited in claim 1, **characterized in that** the rubber material for the shoulder cap layer (51) has a less modulus, preferably by about 5 to 15 percent (%) than that of the rubber material for the tread cap layer (5).

3. The pneumatic tire for a race car as recited in claim 1 or 2, **characterized in that** the shoulder base layer (41) is composed of a rubber material having a greater modulus by about 25-35 percent (%) than that of the rubber material for the shoulder cap layer (51).

4. The pneumatic tire for a race car as recited in any one of claims 1 to 3, **characterized in that** the shoulder base layer (41) has a width in the circumferential direction of the tire corresponding to about 30-40 percent (%) of one half (1/2) of the tread portion's width (W).

5. The pneumatic tire for a race car as recited in any one of claims 1 to 4, **characterized in that** the shoulder cap layer (51) has a width in the circumferential direction of the tire corresponding to about 30-40 percent (%) of one half (1/2) of the tread portion's width (W).

## Patentansprüche

1. Luftreifen für einen Rennwagen, umfassend: einen Laufflächenabschnitt (1), zwei Wulstabschnitte (3) und zwei sich zwischen dem Laufflächenabschnitt (1) und den Wulstabschnitten (3) erstreckende Flankenwandabschnitte (2), wobei der Laufflächenabschnitt (1) aus einer Laufflächengummischicht und einer in Radialrichtung unter der Laufflächengummischicht angeordneten, verstärkten Gurtabschnitt (11) besteht und die Laufflächengummischicht in eine Unterprotektorschicht (4) und eine über der Unterprotektorschicht (4) angeordnete Oberprotektorschicht (5) geteilt ist, wobei die Unterprotektorschicht (4) aus einem Gummimaterial mit einem um etwa 25 bis 35 Prozent (%) größeren Modul als demjenigen des Gummimaterials für die Oberprotektorschicht (5) besteht, **dadurch gekennzeichnet, daß** der Schulterabschnitt der Laufflächengummischicht in eine Schultergrundschicht (41) und eine über der Schultergrundschicht (41) angeordnete Schulterdeckschicht (51) geteilt ist, wobei die Schultergrundschicht (41) härter als die Schulterdeckschicht (51) ist.

2. Luftreifen für einen Rennwagen nach Anspruch 1, **dadurch gekennzeichnet, daß** das Gummimaterial für die Schulterdeckschicht (51) ein vorzugsweise um etwa 5 bis 15 Prozent (%) kleineres Modul als das Gummimaterial für die Laufflächendeckschicht (5) aufweist.

3. Luftreifen für einen Rennwagen nach Anspruch 1 oder 2, **dadurch gekennzeichnet, daß** die Schultergrundschicht (41) aus einem Gummimaterial mit einem um etwa 25-35 Prozent (%) größeren Modul als demjenigen des Gummimaterials für die Schulterdeckschicht (51) besteht.

4. Luftreifen für einen Rennwagen nach einem der Ansprüche 1 bis 3, **dadurch gekennzeichnet, daß** die Schultergrundschicht (41) in der Umfangsrichtung des Reifens eine Breite aufweist, die etwa 30-40 Prozent (%) einer Hälfte (1/2) der Breite (W) des Laufflächenabschnitts entspricht.

5. Luftreifen für einen Rennwagen nach einem der Ansprüche 1 bis 4, **dadurch gekennzeichnet, daß** die Schulterdeckschicht (51) in der Umfangsrichtung des Reifens eine Breite aufweist, die etwa 30-40 Prozent (%) einer Hälfte (1/2) der Breite (W) des Laufflächenabschnitts entspricht.

## Revendications

1. Pneumatique pour une voiture de course comportant : une partie de bande de roulement (1), une paire de parties de talon (3), et une paire de parties de flanc (2) s'étendant entre la partie de bande de roulement (1) et les parties de talon (3), ladite partie de bande de roulement (1) se composant d'une couche de caoutchouc de bande de roulement et d'une couche de ceinture renforcée (11) disposée radialement sous la couche de caoutchouc de bande de roulement, ladite couche de caoutchouc de bande de roulement étant divisée en une couche de base de bande de roulement (4) et une couche de dessus de bande de roulement (5) disposée au-dessus de la couche de base de bande de roulement (4), ladite couche de base de bande de roulement (4) étant composée d'une matière à base de caoutchouc ayant un module plus grand d'environ 25 à 35 pourcent (%) que celui de la matière à base de caoutchouc pour la couche de dessus de bande de roulement (5), **caractérisé en ce que** la zone d'épaulement de la couche de caoutchouc de bande de roulement est divisée en une couche de base d'épaulement (41) et une couche de dessus d'épaulement (51) disposée au-dessus de la couche de base d'épaulement (41), ladite couche de base d'épaulement (41) étant plus dure que ladite couche de dessus d'épaulement (51).

2. Pneumatique pour une voiture de course selon la revendication 1, **caractérisé en ce que** la matière à base de caoutchouc pour la couche de dessus d'épaulement (51) a un module plus faible, de préférence d'environ 5 à 15 pourcent (%), que celui de la matière à base de caoutchouc pour la couche de dessus de bande de roulement (5).

3. Pneumatique pour une voiture de course selon la revendication 1 ou 2, **caractérisé en ce que** la couche de base d'épaulement (41) est composée d'une matière à base de caoutchouc ayant un module plus grand d'environ 25 à 35 pourcent (%) que celui de la matière à base de caoutchouc pour la couche de dessus d'épaulement (51).

4. Pneumatique pour une voiture de course selon l'une quelconque des revendications 1 à 3, **caractérisé en ce que** la couche de base d'épaulement (41) a une largeur dans la direction circonférentielle du pneumatique correspondant à environ 30 à 40 pourcent (%) d'une moitié (1/2) de la largeur de partie de bande de roulement (W).

5. Pneumatique pour une voiture de course selon l'une quelconque des revendications 1 à 4, **caractérisé en ce que** la couche de dessus d'épaulement (51) a une largeur dans la direction circonférentielle du pneumatique correspondant à environ 30 à 40 pourcent (%) d'une moitié (1/2) de la largeur de partie de bande de roulement (W).
